# EUROPEAN PATENT SPECIFICATION

(11) **EP 2 079 952 B1**
(45) Date of publication and mention of the grant of the patent: **26.10.2011**
(21) Application number: 07827656.5
(22) Date of filing: 31.08.2007
(51) Int. Cl.: F16L 7/00

(54) **PIPES SPACER FOR FLUID TRANSPORT**
ROHRDISTANZSTÜCK FÜR FLÜSSIGKEITSTRANSPORT
BAGUE D'ESPACEMENT DE TUYAUX DESTINÉE AU TRANSPORT DE FLUIDES

(30) Priority: 04.09.2006 IT MI20061680
(43) Date of publication of application: 22.07.2009
(73) Proprietor: Stampa Tecnica Materiali Plastici - S.T.A.M.P. S.p.A., 20060 Pozzuolo Martesana (IT)
(72) Inventor: GUERINI, Carlo, I-20060 Pozzuolo Martesana (MI) (IT)
(74) Representative: Ponzellini, Gianmarco
(86) International application number: PCT/IT2007/000602
(87) International publication number: WO 2008/029429

(56) References cited:
- EP-A- 1 262 700
- EP-A- 1 477 716
- DE-U1- 20 020 028
- US-A- 5 069 255

## Description

The object of the present invention is a spacer for fluid-conveying pipes. The fluid-conveying pipes are usually constituted by an inner pipe, (preferably) made of steel or a plastic material, inserted into an outer pipe (preferably) made of steel or concrete. The inner pipe is kept centered with respect to the outer pipe by means of a plurality of spacers which are applied to the outer surface of the inner pipe, before inserting it into the outer pipe.

"Collar-like" spacers are known and available on the market, having an inner diameter substantially coincident with the outer one of the inner pipe and a plurality of radial spacing tongues.

The usually used spacers are constituted by open collars, each one thereof is applied to the inner pipe in a pre-fixed position and it is kept on site by locking therebetween (in a known way) the faced ends of the collar.

The collar can be constituted by a plurality of members coupled therebetween to adapt the inner diameter thereof to the outer one of the inner pipe.

Such type of spacer is described, for example, by the European Patent Nr. 1.262.700 in the name of the Applicant.

The known spacers with open collar have some disadvantages, thereamong it can be mentioned, by way of example, the fact that:
- they request an adjustment mechanical system to perfectly adhere to the inner pipe;
- the collar (each one of the members composing it, respectively) must have means for locking the ends thereof (those of two adjacent members, respectively) thereat the spacing tongues are not present or, however, are not spaced uniformly: in such areas, then, the weight of the inner pipe does not distribute uniformly between the spacing tongues;
- the base body bearing the spacing tongues must have a suitable thickness for bearing the adjustment means and the locking means and, however, a greater thickness than the one requested for bearing the spacing tongues only.

Strip-like spacers for fluid-conveying pipes are known and available on the market as well: the strip-like spacers subject of the European Patent Application Nr. 1.477.716 in the name of the Applicant are mentioned by simple way of example and not for limitative purpose, comprising:
- a plane and strip-like body, sufficiently thin to bend to wind the inner pipe therefrom a plurality of spacing tongues project (in direction orthogonal to the plane of the base body);
- a pair of clips apt to clamp the base body around the inner pipe, each clip being placed at one end of the base body between the ends of the spacing tongues and of the projections placed along the edge of the base body.

The known strip-like spacers have at least the disadvantage of requesting the use of (relatively) expensive and ad-hoc implemented fastening members (the clips), the implementation thereof requests a certain period of time and a qualified operator to position them correctly. The object of the present invention is to obviate the limits and/or drawbacks mentioned above shown by the known spacers, further allowing to reduce the storage, conveying and implementation costs of the spacer.

This object is achieved by means of a spacer implemented according to the present invention, having the characterizing members illustrated in claim 1; additional advantageous features of the invention form the subject of the depending claims.

Additional features of the invention will appear clearer from the following detailed description, referred to embodiments by simple way of example, and therefore not with limitative purpose, illustrated in the enclosed figures, wherein:
- figures 1 a and 1b show schematically a top view and a side view of a spacer implemented according to the invention;
- figures 2 and 3 show schematically two steps for applying the spacer of figure 1 a to an inner pipe;
- figure 4, similar to figure 2, shows schematically an embodiment of a spacer not implemented according to the invention partially applied to an inner pipe;
- figure 5 shows schematically a bottom view of an additional embodiment of a spacer implemented according to the invention;
- figure 6 shows schematically a bottom view of an additional embodiment of a spacer implemented according to the invention;
- figure 7 shows schematically a side view of the spacer of figure 6;
- figures 8a to 8d show schematically and respectively a top view, a side view, a front view and a section view of an additional embodiment of a spacer according to the invention;
- figure 9 shows schematically a top view of an additional embodiment of a spacer implemented according to the invention;
- figure 10 shows schematically a top view of two spacers of the type illustrated in figure 9 hooked therebetween;
- figure 11 shows schematically a side view, a top view and a bottom view of a spacing tongue belonging to a spacer according to the invention, showing the outer profile of the spacing tongues.

In the enclosed figures, the same members are identified by the same reference numerals.

A spacer implemented according to the present invention comprises a substantially strip-like plane body, generally with rectangular plan shape, bearing a plurality of spacing tongues, fastened to the inner pipe by means of at least a strip-like adhesive body (preferably constituted by a piece of adhesive tape) applied at least partially onto one of the opposite edges of the base body and at least partially onto the inner pipe. Along at least one of the opposite edges of the base body there is a plurality of projections coplanar to the base body and the portion of the strip-like adhesive body applied above said projections penetrates into the gaps between the two adjacent projections and it adheres alternatively to the spacer and to the inner pipe, by fastening more tightly the spacer to the inner pipe.

In this way the spacer keeps radially separated two pipes inserted one into the other one and (preferably) coaxial therebetween.

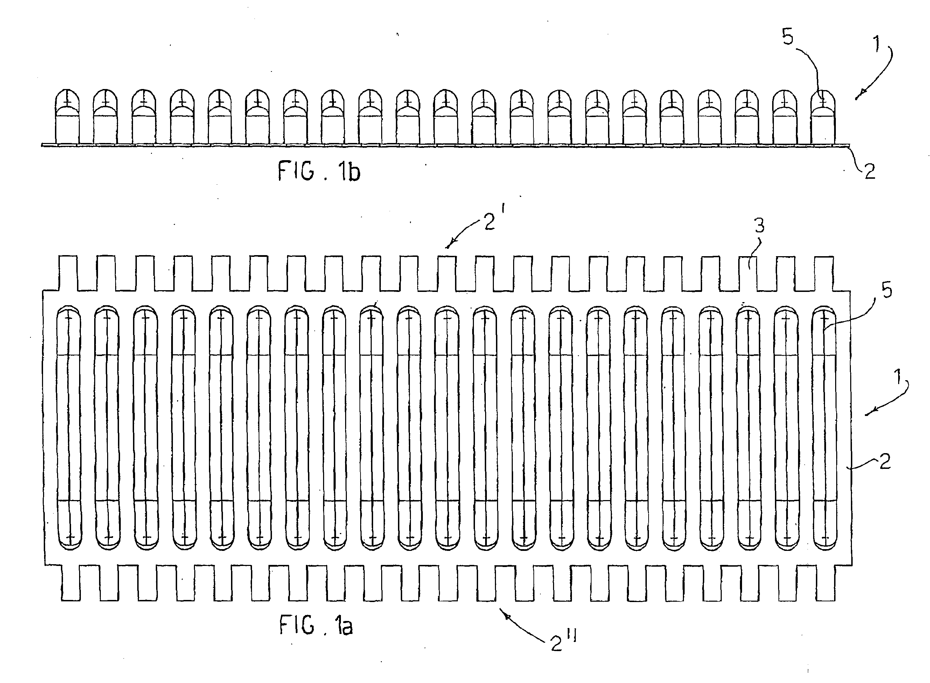

In the embodiments described in figures 1, 4, 5 and 9 the base body is obtained by cutting to length members with length not shorter than the outer circumference of the inner pipe, the (possible) projections are present along both opposite edges of the base body and the adhesive tape is applied along both the opposite edges of the base body; but, without departing from the scope of the invention, the base body can be obtained by cutting to length a continuous strip (in case coil-wound), the (possible) projections can be present along only one of the opposite edges of the base body and/or the adhesive tape can be applied along only one of the opposite edges of the base body.

In the present description, the term "cut to length" means that the base body is cut so that the length thereof corresponds to the outer circumference of the inner pipe.

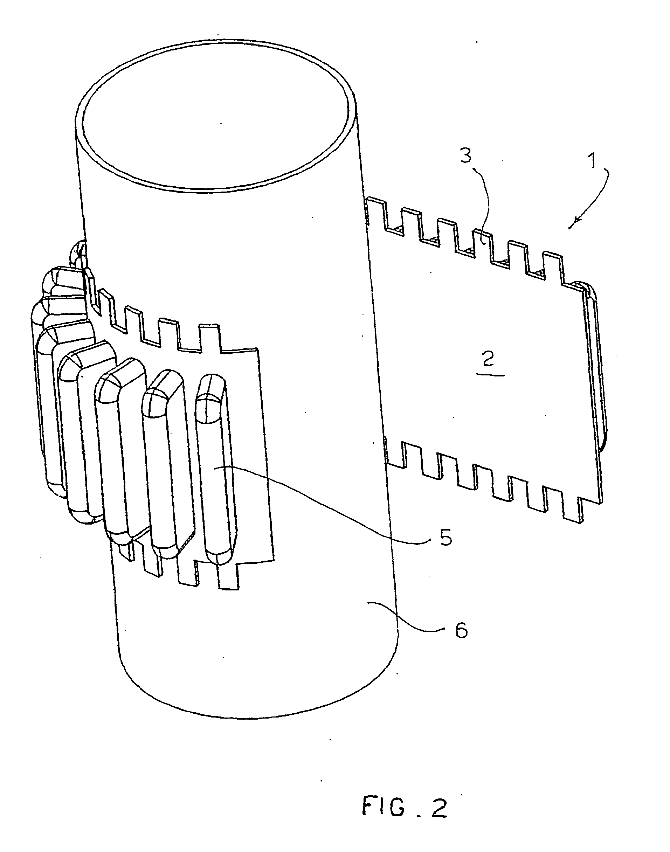

Figure 1 shows schematically a top view (figure 1 a) and a side view (figure 1 b) of a spacer 1 implemented according to the present invention, comprising a base body 2 (preferably a plane and strip-like base body, as well as with a length not shorter than that of the outer circumference of the inner pipe 6; figure 2) bearing a plurality of spacing tongues 5; the tongues project radially from the plane defining the base body so as to allow to space apart the inner pipe from the outer one upon use.

Along both opposite edges (2', 2") of the base body 2 there is a plurality of projections 3 with squared or rectangular shape.

By sake of graphic representation simplicity, in the enclosed figures only one of the projections (3, 3', 3") and of the spacing tongues (5, 5') has been marked with the respective reference numeral.

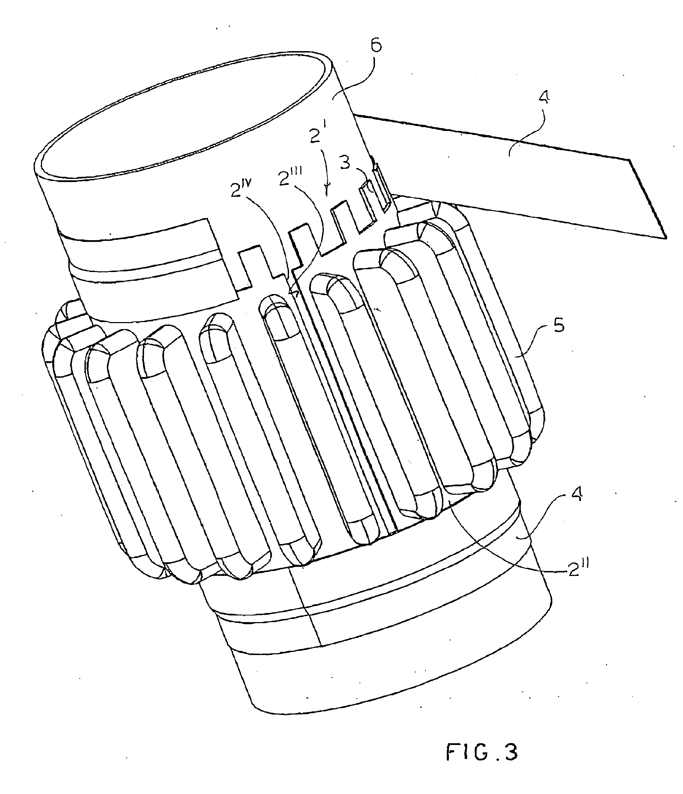

Figures 2 and 3 show schematically two steps for applying the spacer 1 of figure 1 to an inner pipe 6.

Figure 2 shows the spacer 1 partially wound onto the inner pipe 6, whereas figure 3 shows the spacer 1 wholly wound onto the inner pipe 6 and partially fastened to the inner pipe 6 by means of adhesive tape 4.

As shown in figure 3, the adhesive tape 4 is applied partially onto one of the opposite edges (2', 2") of the base body 2 and partially onto the inner pipe 6, it keeps joined the ends (2"', 2"") of the base body 2, it penetrates into the gaps between two adjacent projections 3 and, by adhering to the spacer 1 and to the inner pipe 6, it fastens the spacer 1 to the inner pipe 6.

Preferably, the height of the portion of adhesive tape 4 applied onto one of the opposite edges (2', 2") of the base body 2 is about half of the height of the tape 4.

In other words, the system for constraining the spacer to the inner pipe provides the use of a fastening member suitable to engage to at least one of the opposite edges of the base body and to the outer surface of the inner pipe.

Such fastening member (strip-like adhesive body 4) engages at least partially along the development thereof (and preferably along the whole circumference) the edge (2', 2") of the base body 2 which is destined to wind the pipe 6.

Still in other words, the base body 2 which is defined by a wall with a substantially rectangular shape will be wound onto the pipe so that two of the opposite sides thereof are one at the other one (ends 2"' and 2""), whereas the fastening member(s) 4 will engage the additional opposite sides (edges 2' and 2").

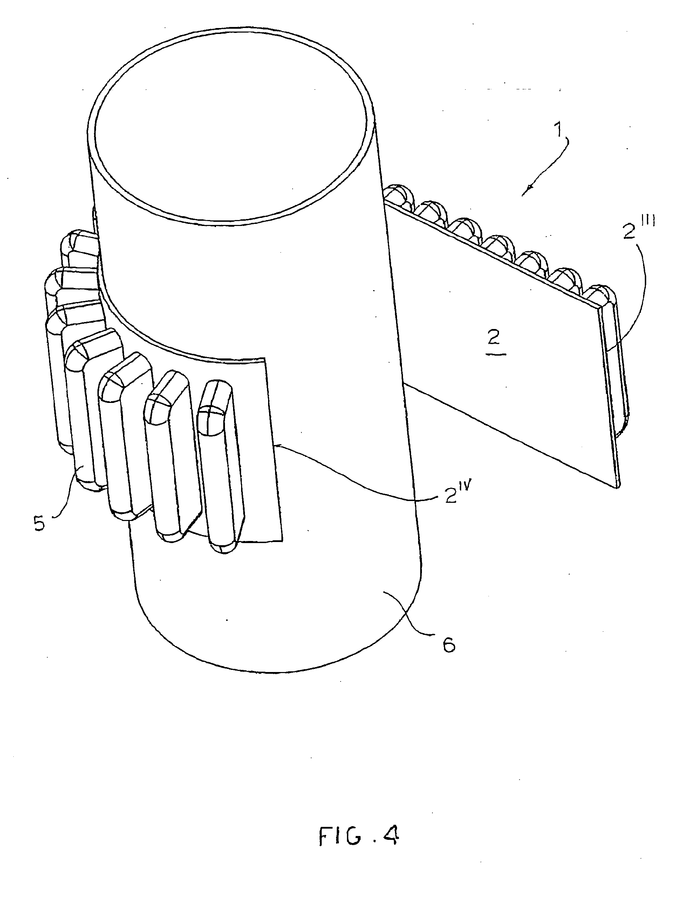

Figure 4, similar to figure 2, shows schematically an embodiment of a spacer 1 not implemented according to the present invention, which differs from the one shown in figures 1-3 mainly due to the fact of not having the projections 3.

The spacer 1 of figure 4 is fastened to the inner pipe 6 in analogous way to what illustrated in figure 3: the adhesive tape 4 is applied partially onto opposite edges (2', 2") of the base body 2 and partially onto the inner pipe 6, it keeps joined the ends (2"', 2"") of the base body 2 and, by adhering to the spacer 1 and to the inner pipe 6, it fastens the spacer 1 to the inner pipe 6.

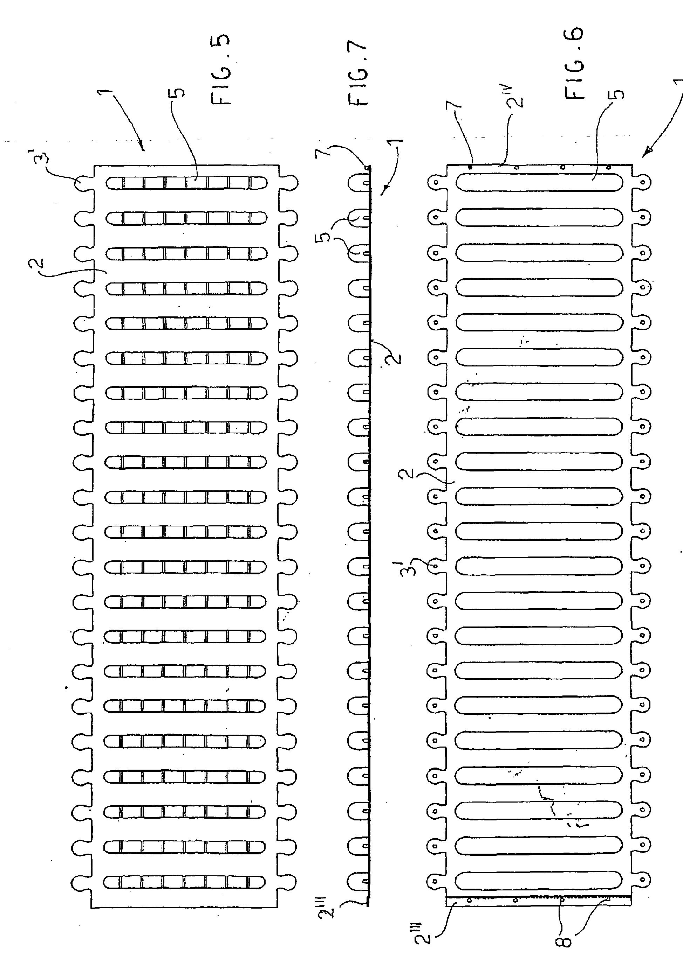

Figure 5 shows schematically a bottom view of an additional embodiment of a spacer 1, which differs from the one illustrated in figure 1 due to the fact that the projections 3' have the shape of rounded peduncles.

Without departing from the scope of the invention, the projections (3, 3') can assume any other shape (different from the ones shown in figures 1, respectively 5) considered each time more advantageous to meet specific requirements.

Figure 6 shows schematically a top view of an additional embodiment of a spacer 1, which differs from the one illustrated in figure 5 mainly due to the fact of further comprising coupling means constituted by a row of pins 7 placed along an end of the base body 2 and apt to engage in corresponding holes 8 existing along the other end of the base body 2 which allow locking temporarily in the operation position the spacer 1 to be able to apply thereto more easily the at least a piece of adhesive tape 4.

The row of pins 7 and corresponding holes 8 can be advantageously used to connect therebetween two spacers 1, by obtaining a spacer apt to be applied to an inner pipe, the outer circumference thereof be longer than the length of each one of the spacers 1.

Without departing from the scope of the invention, the coupling means can comprise at least a pin 7 and at least a hole 8.

The embodiments of a spacer 1 illustrated in figures 1, 4 and 5 too can have coupling means comprising at least a pin 7 and at least a hole 8.

Still without departing from the scope of the invention, the coupling means can be omitted and the spacer 1 (in the embodiments thereof illustrated in figures 1, 4, 5 and/or 6) can be locked temporarily in the operation position by constraining by means of an elastic band (or other functionally equivalent reversible coupling means) the spacing tongues 5 adjacent to the ends (2"', 2"") of the base body 2 (figure 3 and 4).

Figure 7 shows schematically a side view of the spacer 1 shown in figure 6, therefrom it can be seen that the end 2"' of the base body 2 having the at least a slot 8 is lifted-up with respect to the base body 2 to overlap the end 2"" of the base body 2 bearing the at least the pin 7.

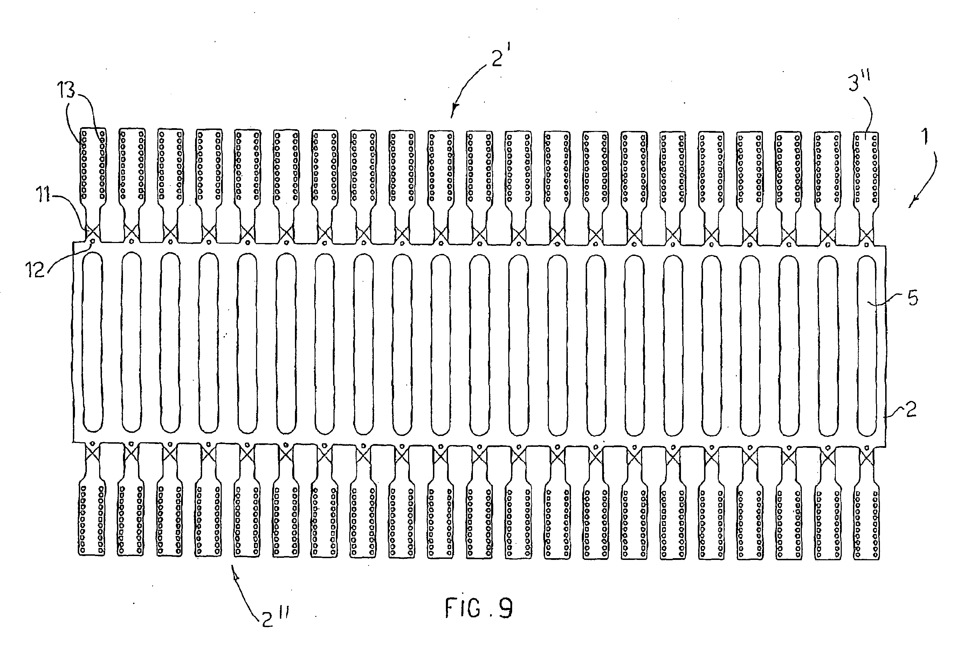

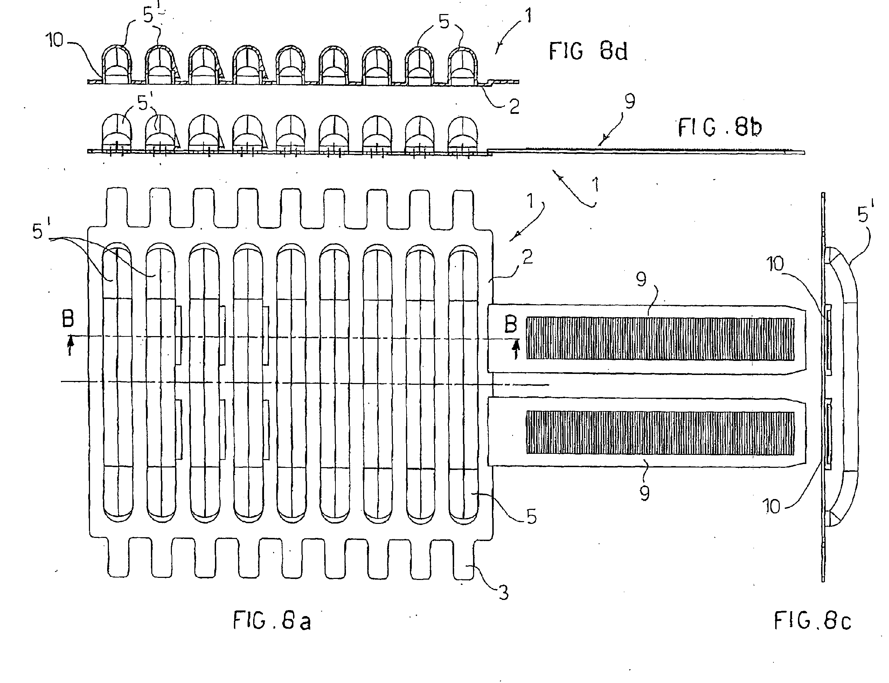

Figure 8 shows schematically a top view (figure 8a), a side view (figure 8b), a front view (figure 8c) and a section view (made along the segment of B-B of figure 8a; figure 8d) of an additional embodiment of a spacer 1, which at one end of the base body 2 has at least a tongue 9 apt to be inserted in at least a seat 10 (figure 8c) implemented in the spacing tongues (designated in figure 9 with the reference numeral 5') adjacent to the other end of the base body 2.

The tongues 9 and the seats 10 will not be described in this context as known on themselves, for example from the European Patent 1.262.700 in the name of the Applicant.

Figure 9 shows schematically a top view of an additional embodiment of a spacer 1 implemented according to the invention which differs from the one illustrated in figure 1 due to the fact that:
- the base body 2 further has first coupling means comprising a plurality of pins 12 placed along the opposite edges thereof (2', 2") at the projections (3"); (in wholly equivalent way they could be defined by holes);
- along the side edges of the projections 3" there are second coupling means comprising a plurality of holes 13; (in wholly equivalent way they could be defined by pins);
- at the basis of each projection 3", an area 11, for example a weakening area, is provided which allows to fold up (preferably, but not necessarily, by 90°) the projection 3".

Without departing from the scope of the invention, the base body 2 can have at least a pin 12 placed along at least one of the opposite edges (2', 2") of the base body 2 at at least one of the projections 3", along at least a side edge of at least a projection 3" there is at least a hole 13 and the area 11 which allows to fold-up by 90° a projection 3" is present at least at the basis of the at least a projection 3" which has at least a hole 13.

Still without departing from the scope of the invention, the projections 3" can have at least a pin 12 apt to engage in at least a hole 13 existing along at least one of the opposite edges (2', 2") of the base body 2.

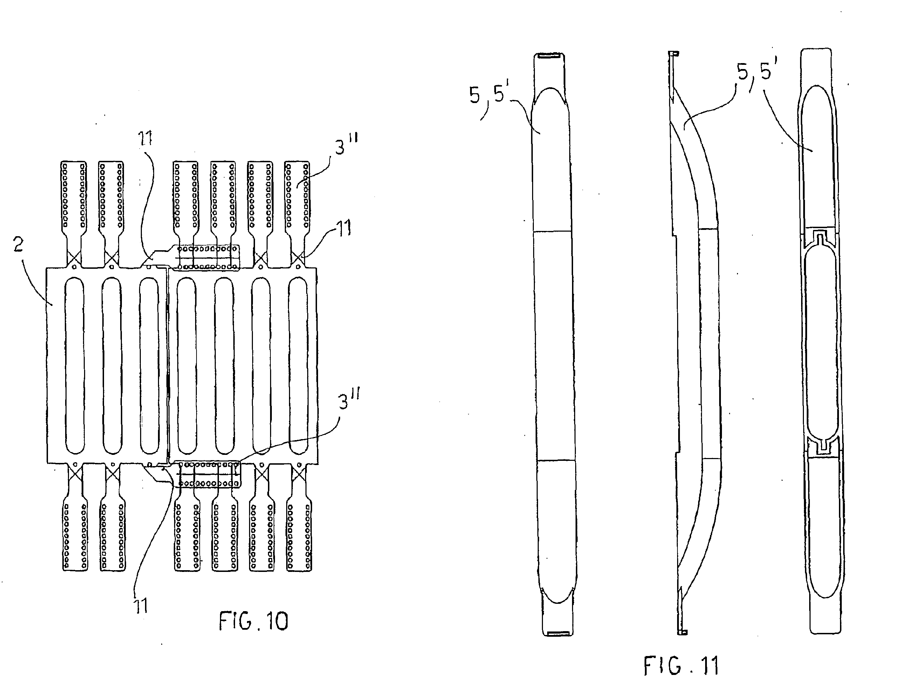

By sake of graphic representation simplicity, in figures 9 and 10 only one of the areas 11, of the pins 12 and of the holes 13 has been marked with the respective reference numeral.

Figure 10 shows schematically a top view of two spacers 1 of the type described in figure 9, hooked temporarily therebetween by folding-up by 90° at least a projection 3" of one of the spacers 1 and by inserting at least a pin 12 belonging to the other spacer 1 in at least a hole 13 of the projection 3" folded-up by 90°.

Figure 11 shows schematically a side view, a top view and a bottom view of a spacing tongue 5 belonging to a spacer 1 implemented according to the invention, which advantageously has an arched outer profile which makes easier inserting the inner pipe 6, bearing the spacer 1 into the outer pipe as it allows the spacer 1 to overcome more easily possible obstacles (such as, for example, welding seams and/or small misalignments between two pieces of adjacent outer pipes) possibly existing onto the inner surface of the outer pipe.

With respect to the spacers for known pipes, the spacer 1 subject of the present invention has several advantages, thereamong:
- a greater speed and implementation convenience: the spacer is implemented by winding thereon the adhesive tape at least once, easily found,
- by implementing the spacers as a continuous strip to be wound, for example, like a coil and to be cut to length, it is not necessary to supply with spacers with different length to adapt to the diameter of the inner pipe thereon the spacers are to be applied time by time and there is a huge reduction in the scraps and in the implementation time of the spacers;
- the projections (3, 3', 3") improve the efficiency of the fastening action performed by the adhesive tape;
- the implementation of the spacer does not require the use of tools, therefore it is easier to be made and it can be performed by a not particularly qualified operator.

Without departing from the scope of the invention as defined by the following claims, a person skilled in the art can introduce to the previously described spacer all modifications and improvements suggested by the usual experience and/or by the natural evolution of the art.

## Claims

1. Spacer (1) for fluid-conveying pipes, comprising:
- a base body (2) destined to wind at least partially an inner pipe (6) and having respective opposite edges (2', 2");
- a plurality of spacing tongues (5, 5') coming out from a surface of base body (2) and destined upon use to keep radially spaced apart two pipes inserted at least partially one into the other one, further comprising at least a fastening member (4) applied partially onto at least one of the opposite edges (2', 2") of the base body (2) and partially onto the inner pipe (6)
**characterized in that** the base body (2) comprises a plurality of projections (3, 3', 3") implemented along at least one of the opposite edges thereof (2', 2") and coplanar thereto and **in that** the portion of the at least a fastening member (4) applied above said projections (3, 3', 3") penetrates into the gaps between two adjacent projections (3, 3', 3") and it adheres alternatively to the spacer (1) and to the inner pipe (6).

2. Spacer (1) according to claim 1, **characterized in that** the fastening member (4) comprises adhesive tape, the spacer being implemented by winding thereon the adhesive tape at least once.

3. Spacer (1) according to claim 1, **characterized in that** the fastening member (4) is an adhesive body, for example a strip-like body, the spacer being preferably fastened to the inner pipe (6) by means of a pair of strip-like adhesive bodies (4), each one thereof is applied partially onto one of the opposite edges (2', 2") of the base body (2) and partially onto the inner pipe (6).

4. Spacer (1) according to claim 1, **characterized in that** the base body (2) has a plurality of projections (3, 3', 3") along both opposite edges thereof (2', 2").

5. Spacer (1) according to claim 3, **characterized in that** the strip-like adhesive body (4) is a piece of adhesive tape.

6. Spacer (1) according to claim 1, **characterized in that** the height of the portion of the strip-like adhesive body (4) applied onto one of the opposite edges (2', 2") of the base body (2) is about half the height of the strip-like adhesive body (4).

7. Spacer (1) according to at least one of the claims 1 to 4, **characterized in that** the fastening member (4) engages along the whole circumference the edge (2', 2") of the base body (2), the fastening member (4) engaging a first opposite edge (2'), an additional fastening member (4) engaging the additional opposite edge (2").

8. Spacer (1) according to at least one of the claims 1 to 4, **characterized in that** the base body (2) is substantially plane and strip-like, such body being obtained by cutting to length members with length not shorter than the outer circumference of the inner pipe (6).

9. Spacer (1) according to at least one of the claims 1 to 4, **characterized in that** the base body (2) further comprises at least first coupling means (7) placed along an end (2"', 2"") of the base body (2) and apt to engage in second coupling means (8) existing along the other end (2"", 2"') of the base body (2), under use conditions the two ends (2"', 2"") being destined to be one at the other one.

10. Spacer (1) according to claim 9, **characterized in that** the end (2"", 2"') of the base body (2) having the second coupling means (8) is lifted up with respect to the base body (2) to overlap the end (2"', 2"") of the base body (2) bearing the first coupling means (7).

11. Spacer (1) according to claim 1, **characterized in that**:
- the base body (2) further has third coupling means (12) placed along at least one of the opposite edges thereof (2', 2") at at least a projection (3"),
- along at least a side edge of said at least a projection (3") there are fourth coupling means (13);
- at the basis of the at least a projection (3") having fourth coupling means (13) an area (11) is provided, for example a weakening area, apt to allow to fold-up the projection (3") preferably by 90°;
and **in that** two spacers (1) are hooked therebetween by folding-up at least one of the projections (3") of one of the spacers (1) and by coupling third coupling means (12) belonging to the other spacer (1) to fourth coupling means (13) existing in the at least a folded-up projection (3").

12. Spacer (1) according to claim 9 or 11, **characterized in that** the first and third coupling means (7, 12) comprise at least a pin and that the second and fourth coupling means (8, 13) comprise at least a hole.

13. Spacer (1) according to claim 9 or 11, **characterized in that** the first and third coupling means (7, 12) comprise at least a hole and that the second and fourth coupling means (8, 13) comprise at least a pin.

14. Process for radially spacing apart two fluid-conveying pipes inserted at least partially one into the other one comprising the following steps:
- prearranging a base body (2) with substantially plane and strip-like shape and having respective opposite edges (2', 2"), a plurality of spacing tongues (5, 5') by coming out from a surface of the base body (2);
- winding at least partially the base body onto an inner pipe (6) so that the spacing tongues (5, 5') upon use can keep two pipes spaced radially;
- constraining the base body (2) to the inner pipe by means of at least a fastening member (4), preferably an adhesive member and still more preferably a strip-like member, partially applied onto at least one of the opposite edges (2', 2") of the base body (2) and partially onto the outer surface of the inner pipe (6),
**characterized in that** the base body comprises a plurality of projections (3, 3' 3") implemented along at least one of the opposite edges thereof (2', 2") and coplanar thereto and **in that** the portion of the at least a fastening member (4) applied above said projections penetrates into the gaps between two adjacent projections and it adheres alternatively to the spacer and to the inner pipe (6).

## Patentansprüche

1. Distanzstück (1) für flüssigkeitsfördende Rohre, umfassend:
- einen Grundkörper (2) zur mindestens Teilwicklung eines Innenrohres (6) und mit entsprechenden entgegengesetzten Rändern (2', 2");
- eine Vielzahl von Distanzzungen (5, 5'), die von einer Fläche des Grundkörpers (2) herausspringen, um beim Betrieb zwei mindestens teilweise ineinander eingesetzten Rohre mit radialem Abstand zu halten, weiter umfassend mindestens ein Befestigungsmittel (4), das teilweise an mindestens einen der entgegengesetzten Ränder (2', 2") des Grundkörpers (2) und teilweise an das Innenrohr (6) aufgetragen wird,
**dadurch gekennzeichnet, daß** der Grundkörper (2) eine Vielzahl von Vorsprüngen (3, 3', 3") umfasst, die entlang mindestens einem seiner entgegengesetzten Ränder (2', 2") vorgesehen und dazu koplanar sind, und daß der Abschnitt des mindestens einen Befestigungsmittels (4), der über die benannten Vorsprüngen (3, 3', 3") aufgetragen wird, in die Lücken zwischen zwei nebenliegenden Vorsprüngen (3, 3', 3") eindringt und alternativ an das Distanzstück (1) und an das Innenrohr (6) anliegt.

2. Distanzstück (1) nach Anspruch 1, **dadurch gekennzeichnet, daß** das Befestigungsmittel (4) ein Klebeband umfasst, wobei das Distanzstück ausgebildet wird, indem man daran das Klebeband mindestens einmal aufwickelt.

3. Distanzstück (1) nach Anspruch 1, **dadurch gekennzeichnet, daß** das Befestigungsmittel (4) ein Klebekörper ist, z.B. ein bandförmiger Körper, wobei das Distanzstück bevorzugt durch ein Paar von bandförmigen Klebekörpern (4) an das Innen Rohr (6) befestigt wird, wobei jeder davon teilweise an einen der entgegengesetzten Ränder (2', 2") des Grundkörpers (2) und teilweise an das Innenrohr (6) aufgetragen wird.

4. Distanzstück (1) nach Anspruch 1, **dadurch gekennzeichnet, daß** der Grundkörper (2) einen Vielzahl von Vorsprüngen (3, 3', 3") entlang seinen beiden entgegengesetzten Rändern (2', 2") aufweist.

5. Distanzstück (1) nach Anspruch 3, **dadurch gekennzeichnet, daß** der bandförmige Klebekörper (4) ein Stück Klebeband ist.

6. Distanzstück (1) nach Anspruch 1, **dadurch gekennzeichnet, daß** die Höhe des Abschnitts des bandförmigen Klebekörpers (4), der an einen der entgegengesetzten Ränder (2', 2") des Grundkörpers (2) aufgetragen wird, ungefähr die Hälfte der Höhe des bandförmigen Klebekörpers (4) beträgt.

7. Distanzstück (1) nach mindestens einem der Ansprüche 1 bis 4, **dadurch gekennzeichnet, daß** das Befestigungsmittel (4) den Rand (2', 2") des Grundkörpers entlang dem Gesamtumfang eingrifft, wobei das Befestigungsmittel (4) einen ersten entgegengesetzten Rand (2') eingrifft, wobei ein zusätzliches Befestigungsmittel (4) den zusätzlichen entgegengesetzten Rand (2") eingrifft.

8. Distanzstück (1) nach mindestens einem der Ansprüche 1 bis 4, **dadurch gekennzeichnet, daß** der Grundkörper (2) wesentlich flach und bandförmig ist, wobei solcher Körper erhalten wird, indem Elemente mit einer Länge, die nicht kürzer als der Außenumfang des Innenrohres (6) ist, auf Maß geschnitten werden.

9. Distanzstück (1) nach mindestens einem der Ansprüche 1 bis 4, **dadurch gekennzeichnet, daß** der Grundkörper (2) mindestens erste Verbindungsmittel (7) weiter umfasst, die entlang einem Ende (2"', 2"") des Grundkörpers liegen und zum Eingriff in zweite Verbindungsmittel (8), die entlang dem anderen Ende (2"", 2"') des Grundkörpers (2) liegen, vorgesehen sind, wobei die beiden Enden (2"', 2"") aneinander liegen sollten.

10. Distanzstück (1) nach Anspruch 9, **dadurch gekennzeichnet, daß** das Ende (2"", 2"') des Grundkörpers (2) mit den zweiten Verbindungsmitteln (8) gegenüber dem Grundkörper (2) angehoben ist, um das Ende (2"', 2"") des Grundkörpers (2) mit den ersten Verbindungsmitteln (7) zu überdecken.

11. Distanzstück (1) nach Anspruch 1, **dadurch gekennzeichnet, daß**:
- der Grundkörper (2) dritte Verbindungsmittel (12) weiter besitzt, die entlang mindestens einem seiner entgegengesetzten Ränder (2', 2") an mindestens einem Vorsprung (3") liegen;
- vierte Verbindungsmittel (13) entlang mindestens einem Seitenrand des benannten mindestens einen Vorsprunges (3") vorgesehen sind;
- am Boden des mindestens einem Vorsprunges (3") mit den vierten Verbindungsmitteln (13) ein Bereich (11) vorgesehen ist, z.B. ein Schwächungsbereich, um das Falten des Vorsprunges (3") bevorzugt um 90° zu ermöglichen;
und daß zwei Distanzstücke (1) dazwischen angehängt werden, indem mindestens einer der Vorsprünge (3") eines der Distanzstücke (1) gefaltet wird und die dritten Verbindungsmittel (12) des anderen Distanzstückes (1) mit den vierten Verbindungsmitteln (13) in dem mindestens einen gefalteten Vorsprung (3") verbunden werden.

12. Distanzstück (1) nach Anspruch 9 oder 11, **dadurch gekennzeichnet, daß** die ersten und dritten Verbindungsmittel (7, 12) mindestens einen Bolzen umfassen, und daß die zweiten und vierten Verbindungsmittel (8, 13) mindestens ein Loch umfassen.

13. Distanzstück (1) nach Anspruch 9 oder 11, **dadurch gekennzeichnet, daß** die ersten und dritten Verbindungsmittel (7, 12) mindestens ein Loch umfassen, und daß die zweiten und vierten Verbindungsmittel (8, 13) mindestens einen Bolzen umfassen.

14. Ein Verfahren zur radialen Trennung von zwei flüssigkeitsfördenden, mindestens teilweise ineinander eingesetzten Rohren, umfassend die folgenden Schritte:
- Vorbereitung eines Grundkörpers (2) mit einer wesentlich flachen und bandförmigen Gestalt und mit entsprechenden entgegengesetzten Rändern (2', 2"), einer Vielzahl von Distanzzungen (5, 5'), die von einer Fläche des Grundkörpers (2) herausspringen;
- mindestens Teilwindung des Grundkörpers auf ein Innenrohr (6), so daß die Distanzzungen (5, 5') beim Betrieb die beiden Rohre mit radialem Abstand halten können;
- Befestigung des Grundkörpers (2) an das Innenrohr durch mindestens ein Befestigungsmittel (4), bevorzugt ein Klebemittel und noch bevorzugter ein bandförmiges Mittel, das teilweise an mindestens einen der entgegengesetzten Ränder (2', 2") des Grundkörpers (2) und teilweise an die Außenfläche des Innenrohres (6) aufgetragen wird,
**dadurch gekennzeichnet, daß** der Grundkörper (2) eine Vielzahl von Vorsprüngen (3, 3', 3") umfasst, die entlang mindestens einem seiner entgegengesetzten Ränder (2', 2") vorgesehen und dazu koplanar sind, und daß der Abschnitt des mindestens einen Befestigungsmittels (4), der über die benannten Vorsprüngen aufgetragen wird, in die Lücken zwischen zwei nebenliegenden Vorsprüngen eindringt und alternativ an das Distanzstück und an das Innenrohr (6) anliegt.

## Revendications

1. Bague d'espacement (1) de tuyaux destinés au transport de fluides, comprenant:
- un corps de base (2) destiné à enrouler au moins partiellement un tuyau intérieur (6) et ayant des bords opposés respectifs (2', 2");
- une pluralité de languettes d'espacement (5, 5') sortant d'une surface du corps de base (2) et destinées à maintenir radialement espacés pendant l'usage deux tuyaux partiellement insérés l'un dans l'autre, comprenant en plus au moins un élément de fixation (4) appliqué partiellement sur au moins un des bords opposés (2', 2") du corps de base (2) et partiellement sur le tuyau intérieur (6),
**caractérisée en ce que** le corps de base (2) comprend une pluralité de saillies (3, 3', 3") réalisées le long d'au moins un de ses bords opposés (2', 2") et coplanaire à celui-ci, et que la portion d'au moins un élément de fixation (4) appliquée sur lesdites saillies (3, 3', 3") pénètre dans les espaces entre deux saillies adjacentes (3, 3', 3") et adhère alternativement à la bague d'espacement (1) et au tuyau intérieur (6).

2. Bague d'espacement selon la revendication 1, **caractérisée en ce que** l'élément de fixation (4) comprend un ruban adhésif, la bague d'espacement étant réalisée en enroulant le ruban adhésif au-dessus au moins une fois.

3. Bague d'espacement selon la revendication 1, **caractérisée en ce que** l'élément de fixation (4) est un corps adhésif, par exemple un corps en forme de bande, la bague d'espacement étant préférablement fixée au tuyau intérieur (6) par une paire de corps adhésifs en forme de bande (4), chacun d'entre eux étant appliqué partiellement sur un des bords opposés (2', 2") du corps de base (2) et partiellement sur le tuyau intérieur (6).

4. Bague d'espacement selon la revendication 1, **caractérisée en ce que** le corps de base (2) a une pluralité de saillies (3, 3', 3") le long de ses deux bords opposés (2', 2").

5. Bague d'espacement selon la revendication 3, **caractérisée en ce que** le corps adhésif en forme de bande (4) est une pièce de ruban adhésif.

6. Bague d'espacement selon la revendication 1, **caractérisée en ce que** la hauteur de la portion du corps adhésif en forme de bande (4) appliquée sur un des bords opposés (2', 2") du corps de base (2) est environ la moitié de la hauteur du corps adhésif en forme de bande (4).

7. Bague d'espacement selon au moins une des revendications 1 à 4, **caractérisée en ce que** l'élément de fixation (4) engage le long de toute le circonférence le bord (2', 2") du corps de base (2), l'élément de fixation (4) engageant un premier bord opposé (2') et un autre élément de fixation (4) engageant l'autre bords opposé (2").

8. Bague d'espacement selon au moins une des revendications 1 à 4, **caractérisée en ce que** le corps de base (2) est substantiellement plat et en forme de bande, tel corps étant obtenu en coupant à mesure des éléments ayant une longueur non inférieure à la circonférence extérieure du tuyau intérieur (6).

9. Bague d'espacement selon au moins une des revendications 1 à 4, **caractérisée en ce que** le corps de base (2) comprend en outre au moins des premiers moyens de liaison (7) placés le long d'une extrémité (2"', 2"") du corps de base (2) et aptes à s'engager dans des deuxièmes moyens de liaison (8) placés le long de l'autre extrémité (2"", 2"') du corps de base (2), en conditions d'usage les deux extrémités (2"', 2"") étant destinées à être l'une sur l'autre.

10. Bague d'espacement selon la revendication 9, **caractérisée en ce que** l'extrémité (2"", 2"') du corps de base (2) ayant les deuxièmes moyens de liaison (8) est soulevée par rapport au corps de base (2) afin de couvrir l'extrémité (2"', 2"") du corps de base (2) ayant les premiers moyens de liaison (7).

11. Bague d'espacement selon la revendication 1, **caractérisée en ce que**:
- le corps de base (2) présente en outre des troisièmes moyens de liaison (12) placés le long d'au moins un de ses bords opposés (2', 2") sur au moins une saillie (3"),
- le long d'au moins un bord latéral de la dite au moins une saillie (3") sont prévus des quatrièmes moyens de liaison (13);
- à la base de l'au moins une saillie (3") ayant les quatrièmes moyens de liaison (13) il est prévu une zone (11), par exemple une zone d'affaiblissement, apte à permettre le pliage de la saillie (3"), préférablement de 90';
et **en ce que** deux bagues d'espacement (1) sont accrochées en pliant au moins une des saillies (3") d'une des bagues d'espacement (1) et en reliant les troisièmes moyens de liaison (12) appartenant à l'autre bague d'espacement (1) aux quatrièmes moyens de liaison (13) placés dans l'au moins une saillie pliée (3").

12. Bague d'espacement selon la revendication 9 ou 11, **caractérisée en ce que** les premiers et les troisièmes moyens de liaison (7, 12) comprennent au moins un goujon, et que les deuxièmes et les quatrièmes moyens de liaison (8, 13) comprennent au moins un trou.

13. Bague d'espacement selon la revendication 9 ou 11, **caractérisée en ce que** les premiers et les troisièmes moyens de liaison (7, 12) comprennent au moins un trou, et que les deuxièmes et les quatrièmes moyens de liaison (8, 13) comprennent au moins un goujon.

14. Procès pour espacer radialement deux tuyaux destinés au transport de fluide insérés au moins partiellement l'un dans l'autre, comprenant les étapes suivantes:
- préparer un corps de base (2) ayant une forme substantiellement plate et en forme de bande et ayant des bords opposés respectifs (2', 2"), une pluralité de languettes d'espacement (5, 5') sortant d'une surface du corps de base (2);
- enrouler au moins partiellement le corps de base sur un tuyau intérieur (6) de sorte que les languettes d'espacement (5, 5') pendant l'usage puissent maintenir les deux tuyaux radialement espacés;
- relier le corps de base (2) au tuyau intérieur par au moins un élément de fixation (4), préférablement un élément adhésif et encore plus préférablement un élément en forme de bande, partiellement appliqué sur au moins un des bords opposés (2', 2") du corps de base (2) et partiellement sur la surface extérieure du tuyau intérieur (6),
**caractérisée en ce que** le corps de base (2) comprend une pluralité de saillies (3, 3', 3") réalisées le long d'au moins un de ses bords opposés (2', 2") et coplanaire à celui-ci, et que la portion d'au moins un élément de fixation (4) appliquée sur lesdites saillies pénètre dans les espaces entre deux saillies adjacentes et adhère alternativement à la bague d'espacement et au tuyau intérieur (6).
